Europäisches Patentamt

European Patent Office

Office européen des brevets

(19)

(11) Publication number: 0 394 065 A2

# (12) EUROPEAN PATENT APPLICATION

(21) Application number: 90304272.9

(22) Date of filing: 20.04.90

(51) Int. Cl.5: **B60T 13/66, B60T 17/18, B60T 13/26**

(30) Priority: 21.04.89 GB 8909103
27.10.89 GB 8924247

(43) Date of publication of application:
24.10.90 Bulletin 90/43

(84) Designated Contracting States:
DE FR GB IT SE

(71) Applicant: LUCAS INDUSTRIES public limited company
Great King Street
Birmingham, B19 2XF West Midlands(GB)

(72) Inventor: McCann, Denis John
10 Derwen Fawr, Crickhowell
Powys, NP8 1DQ Wales(GB)
Inventor: Brearley, Malcolm
2 Widney Manor Road
Solihull, West Midlands, B91 3JQ(GB)
Inventor: Hurst, David Charles
6 Langfield Road, Knowle
Solihull, West Midlands B93 9PN(GB)

(74) Representative: Manley, Nicholas Michael et al
W.P. Thompson & Co. Coopers Building
Church Street
Liverpool L1 3AB(GB)

(54) Back up braking system.

(57) An electronic vehicle braking system has a back-up braking system in which a brake pressure control valve (22) is actuated whenever the vehicle brake pedal is depressed. The output from the valve (22) is connected to a selector valve (24) which isolates the control valve (22) from the vehicle brakes when the electronic braking system functions correctly, but which allows the braking pressure from the control valve (22) to control the vehicle braking when the electronic braking system is faulty.

Also disclosed is a particular example of control valve (22) which is suitable for use in controlling a spring brake (18, 20) in a back-up mode.

*Fig. 1.*

EP 0 394 065 A2

## BACK UP BRAKING SYSTEM

The present invention relates to back up braking systems, and in particular for such systems when used with an electronic braking system (EBS).

A typical EBS braking system has brake pedal actuated potentiometers which fed electrical braking demand signals to front and rear electronic control units along separate electrical channels. Each control unit generates an electrical signal in response to the received braking demand signals, which is used to operate one or more modulators to control the braking pressure applied to the vehicle brakes. The front and rear control units are separate and may also have their own power supplies, so that in the event of a failure of one of the electronic control units or its associated power supply, electronic braking will be maintained on the unaffected axle. Examples of such systems are disclosed in our co-pending European Patent Application Number 90302379.4.

However, problems might occur in an EBS system where the electronic braking becomes totally ineffective. This might occur, for example, if a connection to the vehicle battery is broken or if both controllers develop faults at the same time. In this unlikely situation, a driver of the vehicle is still able to brake the vehicle by operating the parking brake hand valve, which permits the spring brakes which are normally held off by supplying pressurised air, to be applied in a gradual manner on at least one axle, resulting in a secondary braking performance. However, braking time is lost for it to register with the driver that the brakes have failed and for operation of the hand valve.

It is an object of the present invention to provided a back up braking system which automatically operates a vehicle's spring brakes in response to a braking demand at the foot pedal, if electronic braking is totally lost.

In accordance with a first aspect of the present invention there is provided, a vehicle braking system comprising at least one transducer connected to a vehicle brake pedal and producing electrical output signals in response to a braking demand, and an electronic control unit adapted to receive the electrical output signals and electronically control the braking pressure in one or more brakes of the vehicle, characterised by a first, brake pressure control valve actuated by depression of the vehicle brake pedal in order to modulate a pressurised air supply fed to the valve to produce an output which varies with braking demand, a second, selector valve disposed between the first valve and a vehicle brake to be controlled in a back-up mode, and means for actuating the second valve in response to failure of the normal vehicle braking system to connect the output of the first valve to the brake to be controlled in the back-up mode.

In respect of each aspect, the means for actuating the second valve may comprise a spring and a solenoid, the solenoid being adapted to be energised during operation of the normal, or electronic, braking system and to displace the valve against the force of the spring, the spring thereby displacing the valve in the opposite direction when the solenoid de-energises as a result of failure of the normal, or electronic, braking system.

In an electronic braking system with a plurality (e.g. two) of electronic braking channels, it is preferable for the solenoid to be actuated by a number of coils, each coil being actuated by a respective braking channel. Preferably, it is necessary for each of the coils to de-energise in order for the solenoid to de-energise and thereby allow the spring to connect the first valve to the brake.

In one embodiment, the first valve is adapted to be connected to the spring chamber of a spring brake. In such a case, the first valve is preferably provided with a source of pressurised air (which is conveniently from the parking brake valve) and means for connecting the air to the spring chamber of the brake or for venting the spring chamber.

Preferably, the second valve alternatively connects the parking brake valve pressure directly to the spring chamber in one position and connects the parking brake valve pressure as modulated by the first valve in its other position.

Alternatively, the first valve modulates a positive braking pressure which, when the selector valve is in the failed position, is applied to the brakes of the vehicle. The pressure may be applied either to a separate, back-up braking chamber or to the noraml braking chamber. In the latter case, the normal braking pressure output and the back-up pressure output are connected to a double check valve which allows application of one of the pressures at any one time and isolates the brakes from the source of pressure which is not being applied.

In accordance with a second aspect of the present invention there is provided a valve for a back-up braking system of a vehicle, comprising a pressure inlet port and a pressure exhaust port selectively connectible to a pressure outlet port which, in use, is connected to the spring chamber of a spring brake, an inlet valve seat disposed between the inlet port and the outlet port, an inlet valve closure member biased by a first spring towards sealing engagement with the inlet valve seat in which the inlet port is isolated from the outlet port, an exhaust valve seat located on said inlet valve closure member, and an exhaust valve closure member biased by a second spring to engage the exhaust valve seat and to displace the inlet valve closure member from the inlet valve seat against the force of the first spring, the exhaust valve closure member being movable by displacement of a vehcle brake pedal against the biasing force of the second spring to allow engagement of the inlet valve closure member with the inlet valve seat to close the inlet valve and, upon subsequent displacement of the brake pedal, to disengage the exhaust valve closure member from the exhaust valve seat to open the exhaust valve.

Preferably, the inlet valve seat is annular, the inlet valve closure member comprises a hollow piston whose interior communicates with the pressure exhaust port and one end of which is sealingly engageable with the inlet valve seat, and the exhaust valve seat is formed on the said end of the hollow piston, radially inwardly of of the inlet seat.

Preferably, the exhaust valve closure member passes through the inlet valve closure member.

In one embodiment, the valve further comprises an enlarged piston connected to the exhaust valve closure member and slidably disposed in a bore located on the pressure outlet port side of the inlet valve seat, such that the pressure prevailing at the pressure outlet port acts upon one face of the piston.

In another embodiment, the valve further comprises a passage connecting the pressure inlet port with the opposite face of the piston.

By way of example only, specific embodiments of the present invention will now be described, with reference to the accompanying drawings, in which:-

Fig. 1 is a schematic diagram of a first embodiment of back up braking system in accordance with the present invention;

Fig. 2 is a schematic diagram of the system of Fig. 1 during braking, with the EBS inoperative;

Fig. 3 is a cross-sectional side elevation through an embodiment of valve in accordance with the present invention, which may be used in the system of Fig. 1;

Fig. 4 is a schematic diagram of a second embodiment of back-up braking system in accordance with the present invention;

Fig. 5 is a schematic diagram of the system of Fig. 4 during braking, with the EBS inoperative;

Fig. 6 is a schematic diagram of a third embodiment of back-up braking system in accordance with the present invention;

Fig. 7 is a schematic diagram of the system of Fig. 6 during braking, with the EBS inoperative;

Fig. 8 is a schematic diagram of a fourth embodiment of back-up braking system in accordance with the present invention, suitable for applying back-up braking to a trailer, with a parking brake valve in a first position;

Fig. 9 is a diagram of the embodiment of Fig. 8, with the parking brake valve in a second position;

Fig. 10 is a diagram of the embodiment of Fig. 8, with the parking brake valve in a third position;

Fig. 11 is a schematic diagram of a fifth embodiment of back-up braking system in accordance with the present invention, also suitable for applying back-up braking to a trailer; and

Fig. 12 is a cross-sectional side elevation through a further embodiment of valve in accordance with the present invention.

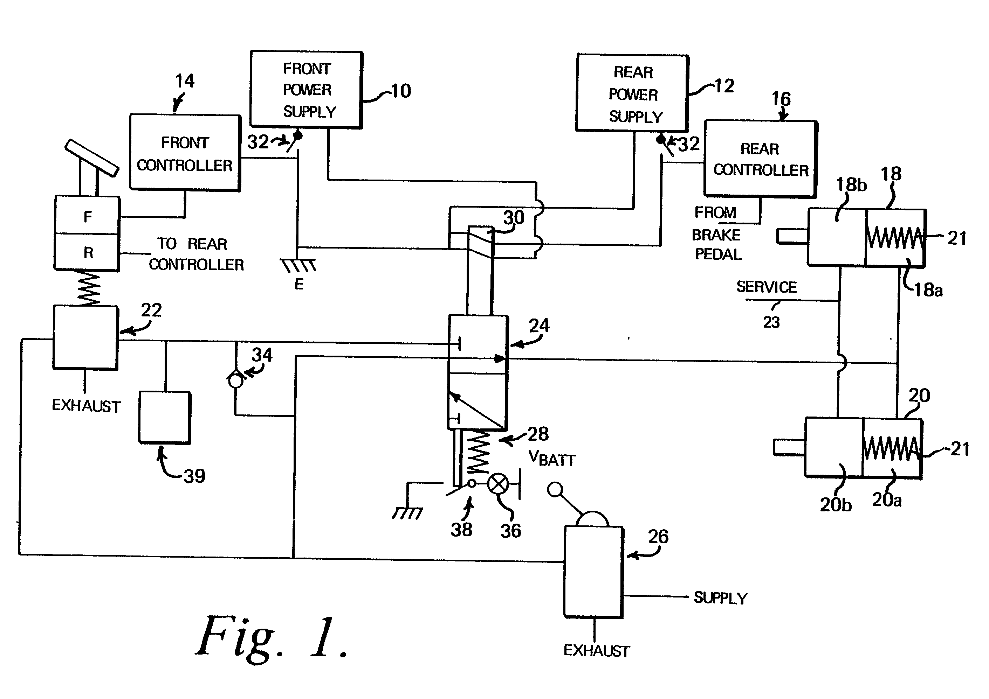

Fig. 1 of the drawings shows a back up system connected to an EBS system comprising front and rear power supplies 10, 12 which power front and rear electronic control units 14, 16 respectively. An EBS pedal feeds electrical braking demand signals along separate front and rear channels to the front and rear electronic control units 14, 16 which then control the application of the service brakes via actuators 18, 20 in the normal way for an EBS system. The spring brakes comprise a very strong compression spring 21 which is held in a compressed state during normal driving by means of compressed air acting on a piston in a compression chamber 18a, 20a. For parking, or in the event of failure of the compressed air supply, the air compressing the spring is exhausted which allows a push rod attached to the piston to push against a brake actuating rod. Normal braking is achieved by applying compressed air to a separate second chamber 18b, 20b which is defined in part by a diaphragm to which the aforementioned brake actuating rod is connected and which is supplied with braking pressure, under the control of the electronic controller 14, via a service braking line 23.

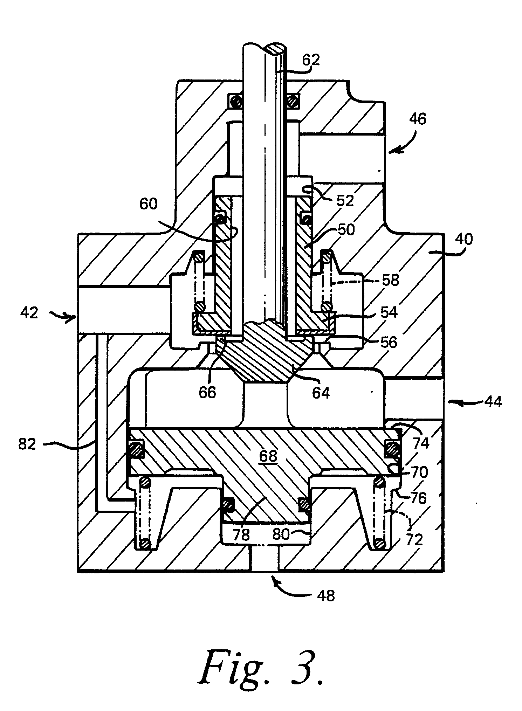

The back up system comprises a brake pedal actuated back up valve 22 and a 3/2 (three-port, two-position) dual wound solenoid actuated valve 24. The back up valve is actuated by depression of the brake pedal, even when the back up function is not required. The construction of one embodiment of back up valve in accordance with the present invention is shown in Fig. 3 and will be described in detail later on. Briefly, the valve 22 is supplied with pressurised air from a parking brake valve 26 when the parking brake valve is in the released position, as shown in Fig. 1. The supply of air is modulated by the back up valve in an inverse and graduated manner (i.e. zero pedal depression produces maximum back up valve output and a given pedal depression results in a zero pressure output), proportional to the braking demand which is indicated by the pedal depression.

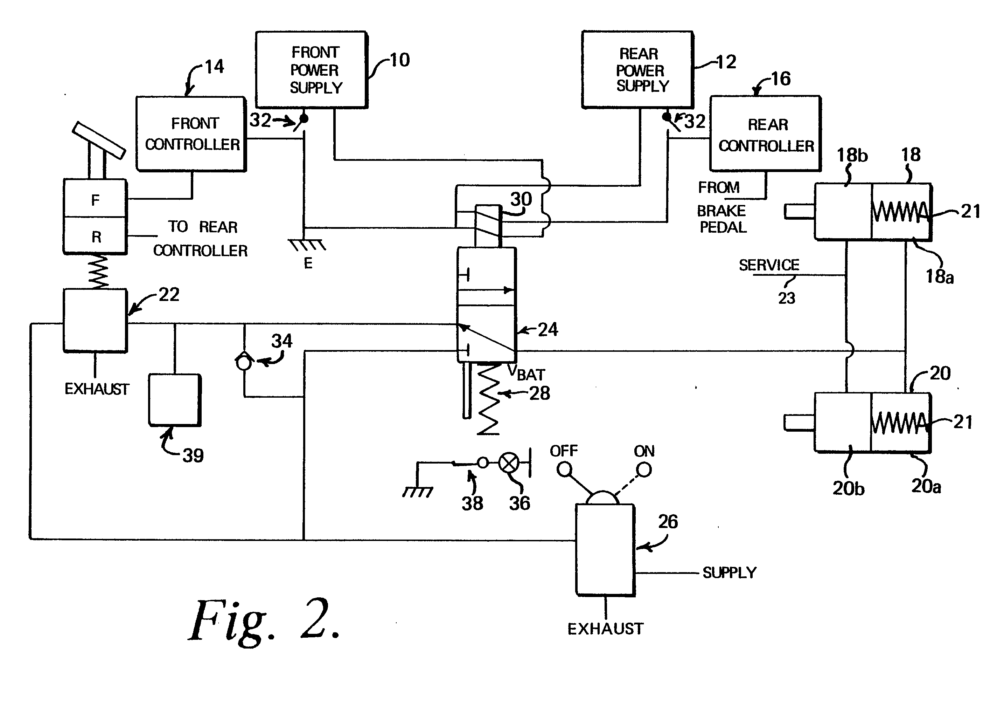

The output from the back up valve 22 and also from the parking brake valve 26 is fed to the 3/2 dual wound solenoid actuated valve 24. The 3/2 valve 24 has two positions, one shown in Fig. 2 into which it is biassed by means of a spring 28, and the other shown in Fig. 1, into which it is moved, against the opposite biassing force of the spring 28, by means of an actuation solenoid 30 forming part of the valve 24. The actuation solenoid 30 is wound with two coils, preferably one directly over, but isolated from, the other. or alternatively arranged alongside one another. One coil is connected to the front power supply 10 and the other is connected to the rear power supply 12, and the two coils may also be connected to a common earth E. As long as one power supply is intact, the solenoid will continue to be energised into the position of Fig. 1 against the force of the return spring 28.

The solenoid power supply comes via respective front and rear electronic control unit-responsive fault shut down relays 32, such that if either the power supply itself fails or if an electronic control unit develops a fault which causes shut down of the unit and hence opening of the relay, then the power to the respective solenoid winding is cut. Only when both solenoid coils cease to be actuated is the 3/2 valve moved to its alternative position and the back up function is allowed.

The back up system further comprises a non-return valve 34 connecting the output of the back up valve 22 with that of the parking brake valve 26. As will become apparent later, this allows the parking brake valve to operate the spring brakes, by releasing the hold off air, when the 3/2 valve has moved into the failed mode position. Also included in the back up system is a driver warning lamp 36, which is located on the vehicle dashboard. In normal operation, when the solenoid valve is energised and in its Fig. 1 position, the lamp is prevented from lighting by a switch 38 held open by the solenoid valve. Only when the solenoid valve is in its alternative, back up, position is the switch 38 allowed to close, thereby providing a visual indication to the driver that the braking system is not healthy.

One embodiment of back up valve is shown in Fig. 3. The valve comprises a valve body 40 having a supply port 42, an outlet port 44, an exhaust port 46 and a vent port 48. In use, the supply port is connected to the parking brake valve 26 and the outlet port is connected to the 3/2 solenoid valve 24 and the non-return valve 34. The exhaust and vent ports 46, 48 are open to atmosphere. The valve further comprises an inlet valve closure member 50 having a generally cylindrically shaped body which is slidably disposed in a stepped bore 52 and an enlarged head portion 54. The enlarged head 54 of the inlet valve closure member 50 is urged towards engagement with an annular inlet valve seat 56 provided within the housing, by means of a compression spring 58 extending between the valve housing and the enlarged head 54.

The inlet valve closure member is provided with a centrally disposed longitudinal bore 60 which is adapted to receive an elongated actuating rod 62 of smaller diameter. The rod 62 is moved by movement of the vehicle brake pedal, to which it is attached. The rod is provided with an enlarged head 64 with an upstanding annular rib 66, of greater diameter than the bore 60 in the inlet valve closure member 50, which is adapted for engagement with the undersurface of the enlarged head 54 of the inlet valve closure member which thus forms an exhaust valve closure seat.

The rod 62 is preferably rigidly connected to, or, alternataively, may be spigoted to, a broad piston 68 which is slidably disposed in a bore 70. The piston 68 is urged towards the inlet valve seat 56 by means of a compression spring 72, but the upward travel of the piston 68 (and therefore of the head 64 of the rod 62) is limited by means of an annular shoulder 74. Similarly, the downward movement of the piston is limited by means of a further shoulder 76. The piston 68 is provided with a narrower guide portion 78 which is slidably disposed in a bore 80. The provision of the vent port 48 prevents partial vacuums and/or pressures from impeding the motion of the piston 68. It should also be noted that the inlet port 42 communicates with the space beneath the broad piston 68 by means of a connecting passage 82.

Fig. 3 shows the valve in a normal, non-braking mode. The spring 72 forces the piston 68 and rod 62 upwardly as far as possible, and the engagement of the annular rib 66 of the enlarged head 64 of the rod 62 closes off the valve from the exhaust port 46 and lifts the inlet valve closure member off the inlet valve seat 56. Thus, air supplied to the inlet port 42 from the parking brake valve 26 is able to flow freely to and from the spring brakes, subject to the position of the 3/2 valve 24.

During brake application, as the brake pedal is pressed, the actuating rod 62 moves against the force of spring 72. The first result is that the inlet valve closure member 50 engages with its valve seat, thus keeping the pressure at the outlet port 44 constant initially. As the pedal travel increases, the further movement causes the annular rib 66 of the enlarged head 64 of the rod to disengage from the valve seat formed by the undersurface of the head 54 of the inlet valve closure member 50. This allows air which is holding off the spring brakes to start to be exhausted, depending on the position of the 3/2 valve, and hence application of the spring brakes begins. If the input force is held, the lower piston and hence the enlarged head 64 of the rod 62 rises under the influence of the supply pressure which is continually acting on its lower surface and the annular rib 66 of the head 64 therefore engages its valve seat, closing the exhaust valve.

Both the inlet and the exhaust valves are thus closed, and the valve in the "lapped" condition. Pressure acting on the spring brakes is therefore held steady. When the brake pedal is released, the valve returns to the original condition by virtue of the spring 72, and air is readmitted to hold off the spring brakes.

The valve component areas are dependent upon the desired relationship between brake pedal force and the amount of braking provided by the spring brakes, and may be varied as desired. It should also be noted that the movement of the valve occurs whenever the brake pedal is depressed, but that it only has an effect on the spring brakes when the solenoid of the 3/2 valve 24 is de-energised.

Returning now to Fig. 1, under normal EBS operation, the brakes are held in the "off" position as a result of the air pressure supplied by the parking brake valve 26 which is fed through the 3/2 solenoid valve 24. Application and release of the brake pedal causes the back up valve 22 to modulate the air pressure in the output of the valve 22, but the 3/2 solenoid valve 24 isolates the back up valve from the spring brakes 18, 20, and so the back up valve has no effect on the pressure in the spring brakes, thus allowing normal EBS operation via the front and rear electronic control units 14, 16 and the service braking line 23. The actuation of the back up valve during normal, EBS braking has the advantage that it cycles the internal components of the back up valve 22 and thus reduces the likelihood of seizure.

In order to ensure that the back-up valve 22 functions correctly each time the vehicle brake pedal is depressed, even when the EBS is functioning properly, the pressure in the output from the back-up valve is monitored by a sensor 39. The sensor 39 may be either in the form of a pressure switch or a transducer, and confirms that the output pressure of the back-up valve decreases when the pedal is depressed, even through the output pressure has no effect until the EBS fails. The output of the sensor 39 is used to light the warning lamp 36 or a separate warning lamp in the event that the output pressure does not decrease sufficiently when the pedal is depressed, to inform the driver that a fault exists in the back-up braking system. The transducer can monitor the output of the back-up valve 22 over a wide operating range, but a pressure switch has advantages in terms of cost and installation. Such devices are well known in the art, and will not be further described.

Fig. 2 shows the operation of the back up system when the normal EBS braking is no longer effective, i.e. when normal braking pressure is not supplied in the service braking line 23. This is indicated schematically as a break in both front and rear power supplies by switches 32 under the control of fault-responsive relays, and results in de-energising of the actuation solenoid 30 of the 3/2 valve 24, allowing the return spring 28 to displace the valve 24 into the alternative position. This connects the output of the back up valve 22 to the spring brakes 18, 20 and blocks off the parking brake valve from the spring brakes. Force being supplied to the back up valve from the brake pedal first causes the valve to hold the supply pressure and to release air from the spring brakes, thereby bringing the spring brakes progressively into operation. By ceasing the braking action, pressurised air is admitted to the spring brakes from the parking brake valve 26 via the back up valve 22, causing the brakes to be progressively released.

If the actuation solenoid 30 were de-energised actually during a braking operation, the 3/2 valve will immediately switch positions and the spring brakes will be automatically substituted, thereby providing a graduated secondary level of braking performance.

Throughout the back up operation the switch 38 will be closed and the lamp 36 lit, thus indicating to the driver that only an emergency, back up level of braking is available.

The parking brake can still be applied even when the back up system is in operation. A direct connection is established between the spring brakes 18, 20 and the parking brake valve 26 via the non-return valve 34, thus allowing the hold-off pressure to be released and allowing the parking brakes to be applied upon actuation of the parking brake valve 26. It should be noted, however, that the non-return valve 34 prevents the direct connection of the parking brake valve 26 with the spring brakes 18, 20 during back up operation, and it can only be connected via the modulating effect of the back up valve 22.

Thus, in the present invention, the spring brakes are automatically applied in response to the driver's braking demand at the foot pedal if total EBS failure occurs. When the braking demand is removed, the spring brakes are released. Both application and release of the spring brakes is progressive, in a manner determined by the driver's demand at the brake pedal.

The dual wound solenoid of the 3/2 valve ensures that switching does not occur unless power is lost from both circuits. With the ignition switch in the off position, both power supplies would be cut, so the valve switches to the position of Fig. 2. Operation of the parking brake applies the spring brakes.

5

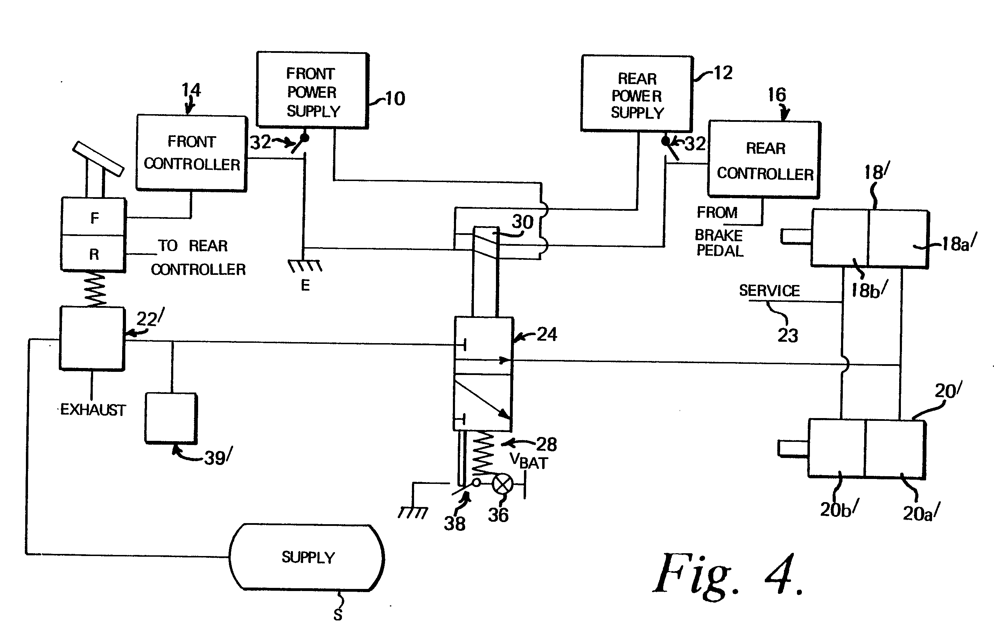

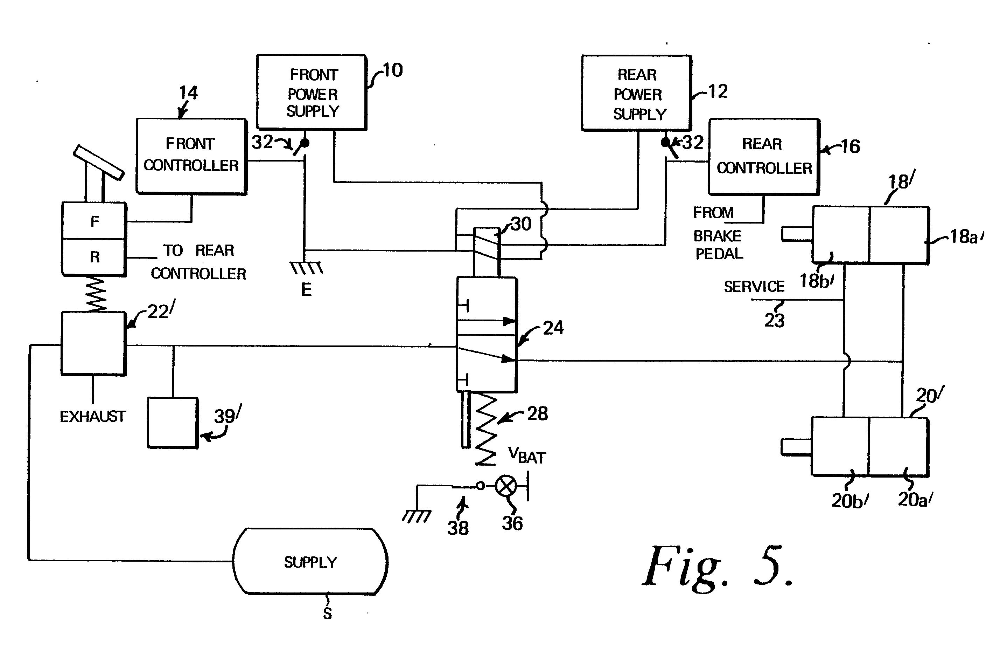

A second embodiment of back-up braking system is illustrated in Figs. 4 and 5. The back-up system is connected to an EBS system similar to that of the first embodiment, and identical reference numerals have been used for identical components. The EBS system comprises front and rear power supplies 10, 12 which power front and rear electronic control units 14, 16 respectively. An EBS pedal feeds electrical braking demand signals along separate front and rear channels to the front and rear electronic control units 14, 16 which then control the application of the service brakes via actuators 18′, 20′ in the normal way for an EBS system.

The actuators 18′, 20′ in the illustrated embodiment comprise double diaphragm actuators. Normal braking is achieved by applying compressed air from the service brake pressure to a first diaphragm in a first chamber 18b′, 20b′, the supply of air being regulated by the associated electronic controller 14, 16. In Fig. 4, the brakes illustrated are the front vehicle brakes.

The back-up system comprises a brake pedal actuated back-up valve 22′ and a 3/2 (three-port, two-position) dual wound solenoid actuated valve 24. The back-up valve 22′ is actuated by the depression of the brake pedal, even when the back-up function is not required. The back-up valve 22′ is a so-called "up-right" valve, i.e. the output pressure from the valve is directly proportional to the force input from the EBS pedal assembly. This is in contrast to the back-up valve 22 of the first embodiment, in which the output pressure is inversely proportional to the braking force applied. The valve 22′ is supplied with pressurised air from a supply S (which could, if desired, be the parking brake air pressure). The output from the back-up valve 22′ is fed to the 3/2 dual wound solenoid actuated valve 24. The 3/2 valve 24 has two positions, one shown in Fig. 5 into which it is biassed by means of a spring 28, and the other shown in Fig. 4 into which it is moved, against the opposite biassing force of the spring 28 by means of an actuation solenoid 30 forming part of the valve 24.

The actuation solenoid 30 is wound with two coils, one directly over, but isolated from, the other, or alternatively arranged alongside one another. As in the first embodiment, one coil is connected to the front power supply 10 and the other is connected to the rear power supply 12, and the two coils may also be connected to a common earth E. As long as one power supply is intact, the solenoid will continue to be energised into the position of Fig. 4 against the force of the return spring 28. The construction and operation of the valve 24 is otherwise identical to that of the first embodiment, and also includes the driver warning lamp 36 and switch 38 of the first embodiment.

Under normal EBS operation, the solenoid valve 24 is held in the position illustrated in Fig. 4 by actuation of the solenoid 30, since the front and rear power supplies 10, 12 will still be in operation. Vehicle braking is achieved by application of pressurised air from the service pressure which is modulated by the actuators 18′, 20′ under the control of the front and rear controllers 14, 16, which receive braking signals from the front and rear EBS sensors F, R respectively. It will be noted that under normal EBS braking, the back-up valve 22′ is isolated from the actuators 18′, 20′, since the valve 24 is in the position illustrated in Fig. 4.

Fig. 5 shows the operation of the back-up system when the normal EBS braking is no longer effective. This is indicated by the switches 32 being opened under the control of fault-responsive relays. This results in de-energising of the actuation solenoid 30 of the 3/2 valve 24, allowing the return spring 28 to displace the valve 24 into the alternative position, as for the first embodiment. This connects the output of the back-up valve 22′ to second chambers 18a′, 20a′ of the actuators 18′, 20′. Force being supplied to the back-up valve from the brake pedal thus causes a modulation of the output from the back-up valve 22 in accordance with braking demand, and since the 3/2 valve 24 is in its alternative position, this modulated air pressure is supplied to the second diaphragm of the double diaphragm actuators 18′, 20′, thereby providing a secondary level of braking performance in the event of EBS failure. As for the first embodiment, a warning light 36 is actuated to alert the driver to the fact that the EBS system is no longer effective. Also, as for the first embodiment, it will be noted that even when the EBS system is effective, actuation of the vehicle brake pedal causes the movement of the back-up valve 22′, with the advantage that it cycles the internal components of the back-up valve and thus reduces the likelihood of seizure.

As with the embodiment of Fig. 1, in order to ensure that the back-up valve 22′ functions correctly each time the vehicle brake pedal is depressed, even when the EBS is functioning properly, the pressure in the output from the back-up valve is monitored by a sensor 39′. As before, the sensor 39′ may be either in the form of a pressure switch or transducer, but since the back-up valve 22′ is an "upright" valve, the sensor is arranged to confirm that the output pressure increases when the pedal is depressed, even though the output pressure has no effect until the EBS fails. The output of the sensor 39′ is used to light the warning lamp 36 or a separate warning lamp in the event that the output pressure does not increase sufficiently when the pedal is depressed, to inform the driver that a fault exists in the back-up braking system. The transducer can monitor the output of the back-up valve 22′ over a wide operating range, but a pressure switch has advantages in terms of cost and installation. Such devices are well known in the art, and will not be further described.

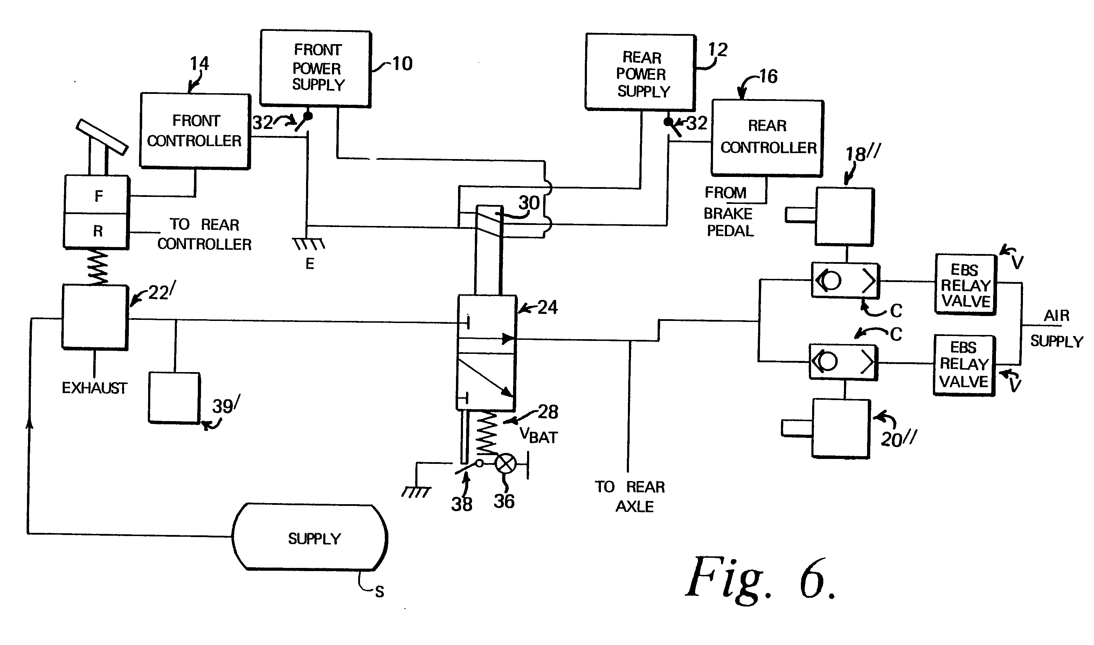

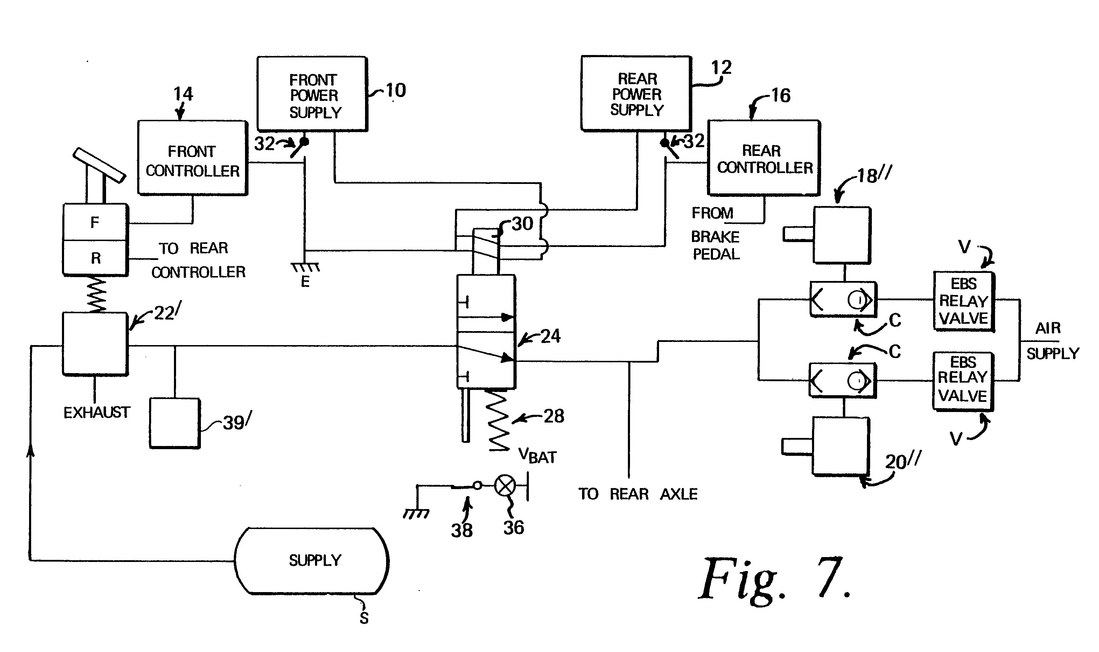

A third embodiment of the present invention is illustrated in Figs. 6 and 7. The construction of this embodiment is identical to the embodiment of Figs. 4 and 5, except that the back-up system actuates the brakes through the normal service actuators 18″, 20″, without the requirement for additional actuators in the form of double diaphragm actuators, nor vehicle spring brakes. Instead, double check valves C are used to connect both the EBS and back-up system to each actuator of the axle. A further connection could be made to the other axles, as illustrated in Fig. 6. This would mean that the back-up system would provide braking on all axles of a vehicle, retaining most, if not all, of the braking performance.

The back-up system is otherwise identical to the back-up system of Figs. 4 and 5, and the 3/2 valve 24 is normally held in the position illustrated in Fig. 6, thereby isolating the output of the back-up valve 22′ from the check valves C. Any normal, EBS-modulated braking pressure applied to the system will thus cause the check valve to close on the back-up side, as illustrated in Fig. 6, and normal EBS operation occurs via the EBS relay valves V.

In the event of EBS failure, the 3/2 valve 24 moves into the position illustrated in Fig. 7, as for the previous embodiments, thereby connecting the output of the back-up valve 22′ to the check valves C. Since the EBS modulated pressure will effectively be zero, any application of back-up brake pressure from the output of the back-up valve 22′ will cause the check valves C to close off the EBS side of the check valves and thereby allow the back-up pressure from the supply S, as modulated by the back-up valve 22′ in accordance with the braking demand to be supplied to the actuators 18″, 20″.

The above back-up systems operate on the brakes of a vehicle through the foot brake pedal in the event of a total electronic braking system failure. This arrangement is satisfactory for vehicles which do not tow trailers, but when trailers are towed it is desirable to be able to operate the vehicle brakes and the trailer brakes simultaneously, through the foot brake as before.

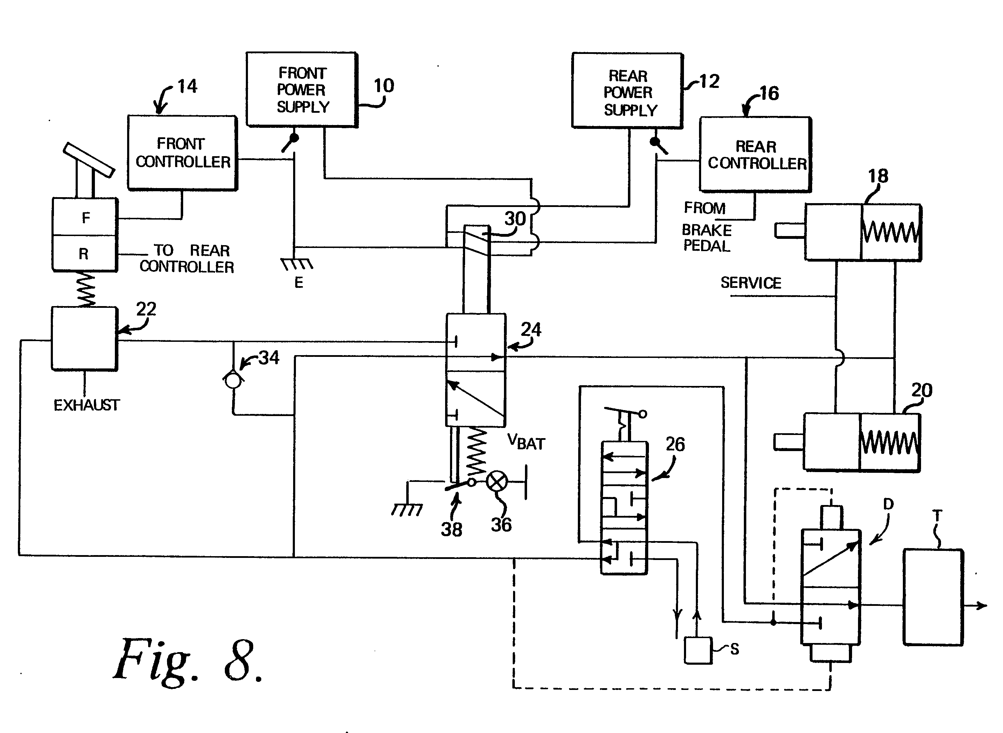

It is known, for example from European patent application No.90302379.4 to provide an electronic braking system in which an electronic trailer controller T receives braking demand signals from an EBS pedal, and generates signals to control an electrical trailer braking valve supplied with pressurised air in order to produce braking pressure in response to braking demand signals at the pedal. An example of this is shown in Figs. 8 to 10. This embodiment is similar to that of Figs. 1 and 2, and identical reference numerals have been used to identify identical items.

It will be noted from the Figure that it is possible to operate the trailer brakes not only through the electronic braking system, but also by operating the hand control parking valve 26. The valve normally has three postions which result in the following:

| Position | Truck Spring Brakes | Trailer Brakes | Fig. No. |
|---|---|---|---|
| Off | Off | Off | Fig. 8 |
| Secondary (usually graduated) | On | On | Fig. 9 |
| Park | On | Off | Fig. 10 |

In both the truck and trailer cases, applying the brakes is achieved by exhausting pressure, and removing the brakes is achieved by applying pressure. It will also be noted that when the hand control parking valve 26 is in its park position, the trailer brakes are removed. This is because it is not generally permitted to park a trailer by its air brakes.

An exception to the above is in certain territories, which allow temporary trailer parking by air braking, although such trucks are usually equipped with hand control valves which have a "test" position, in which the truck spring brakes are applied and the trailer brakes are released as in the "park" case above, enabling the driver to ascertain whether the truck and trailer combination would be held on the prevailing gradient by the truck spring brakes alone.

A straightforward way of integrating the two systems would be to connect the trailer control valve to the truck spring brake line, thus ensuring that when the hand control valve is in the off and secondary positions, both the braking systems operate. However, this would not satisfy the park or test position described above.

Figs. 8 to 10 show an embodiment of the present invention which permits correct operation by use of a differential pilot 3/2 (three port, two position) valve D connected in to the system between the hand control parking valve 26 and the trailer valve. The valve alternatively connects the output of the first 3/2 valve 24 or the output of the hand control valve 26 to the trailer valve. The parking valve 26 is fed with pressurised air from a source S. The differential 3/2 valve has a larger pilot area on one side than the other, thus ensuring that when each side is connected to an equal pressure source, the valve will be biassed in favour of the larger side, into the position illustrated in Figure 8, wherein the output of the first 3/2 valve 24 is connected to the trailer valve T.

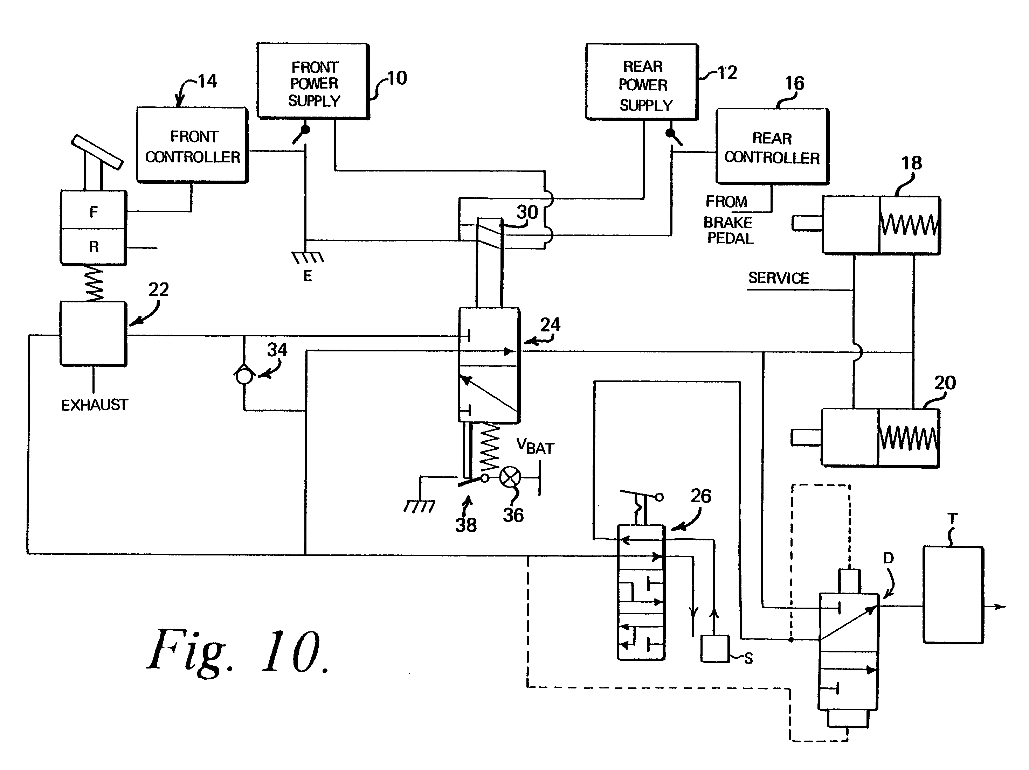

When the hand control valve 26 is moved to the park position (Fig. 10) the 3/2 valve is switched by virtue of its differential operation, thus releasing the trailer brakes. This continues to be so whether the electronic braking system is operational, and so ensures that the working parts of the valve are cycled, thus reducing the likelihood of seizure.

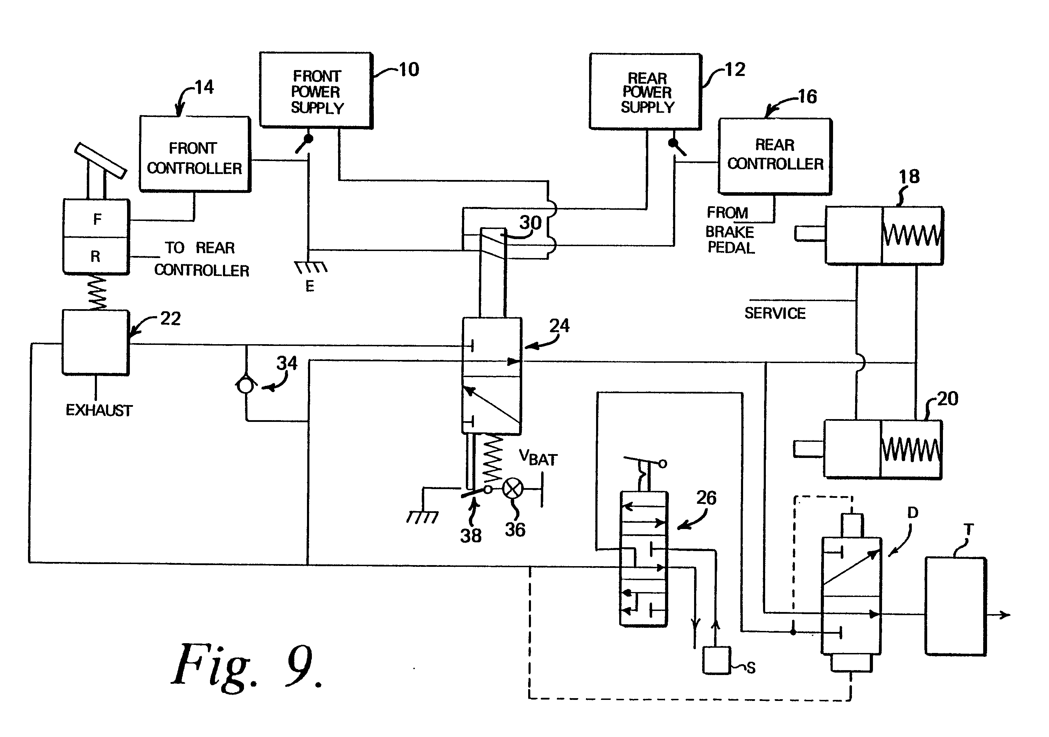

Fig. 9 shows a secodary position of the valve 26, in which the differential pilot valve D is in its original position, and in which both the vehicle brakes and the trailer brakes are applied.

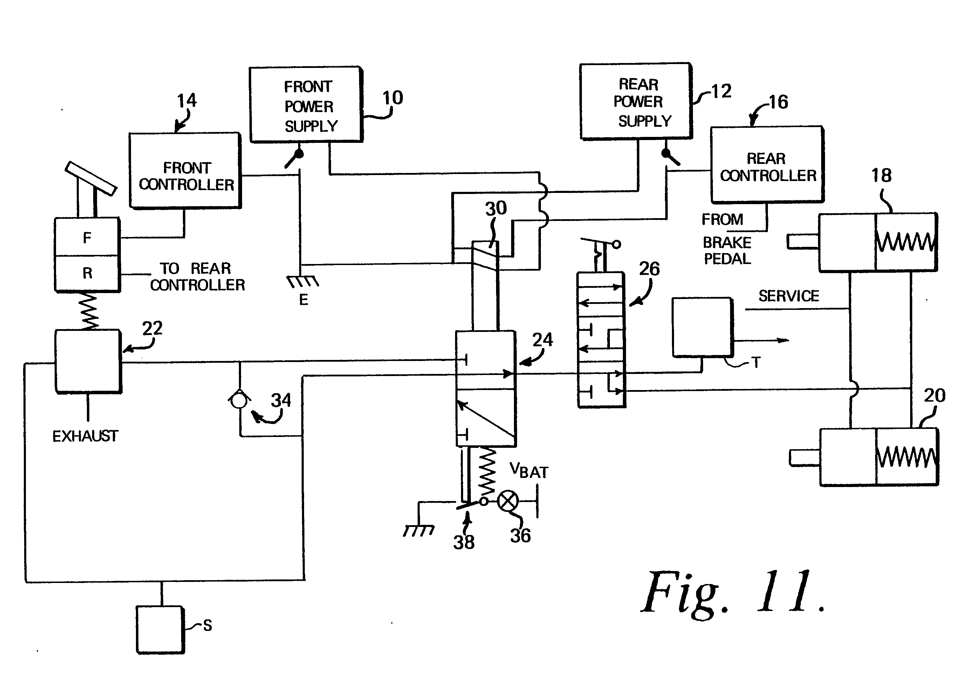

A further embodiment is illustrated in Fig. 11, in which the park brake valve 26 is connected directly between the output of the 3/2 dual wound solenoid valve, and the inputs of the trailer valve T and the spring brake actuators (18, 20) of the spring brakes. The supply of pressure to the back-up valve 24 is no longer taken from the park brake valve, but instead is taken directly from the pressurised source S. This arrangement overcomes the above-mentioned disadvantages, and satisfies the conditions in the Table above.

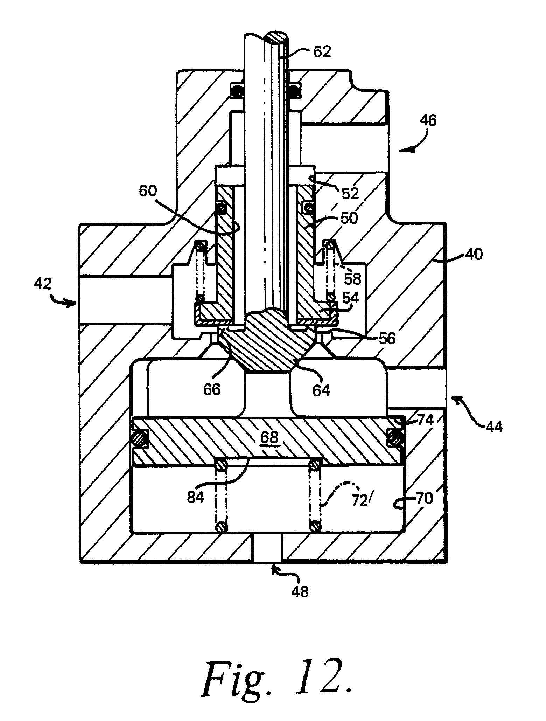

Referring now to Fig. 12, an alternative embodiment of valve in accordance with the present invention, which is a variant of the valve of Fig. 3, is illustrated in cross-section. The valve is very similar to the valve of Fig. 3, and the same features have been given the same reference numeral, with the addition of a dash.

The main differences between the valve of Fig. 12 and the valve of Fig. 3 are that the connecting passage 82 of the Fig. 3 embodiment is dispensed with, the guide portion 78 of the piston 68 and the corresponding bore 80 are dispensed with, and the spring 72 is replaced with a narrower spring 72′ which is seated in a recess 84 in the undersurface of the piston 68.

The valve of Fig. 12 has an improved response when compared with the valve of Fig. 3. As spring brakes are usually fully held off at an air pressure of typically 5.5, much of the pedal travel when the pedal is depressed is taken up jettisoning air at supply pressure but not actually applying the brakes. To enable more of the pedal travel to produce a braking effect, the valve regulates the hold-off pressure to approximately 6 bars, by changing the force/area relationship of the piston 68.

In a normal, non-braking mode, the pressurised air at supply pressure is fed from the supply to the spring brakes. It should be noted that, in contrast to the Fig. 3 valve, the air pressure is applied to the top face only of the piston 68′, and is not applied to the undersurface.

During brake application, as the brake pedal is pressed, the actuating rod 62 moves against the force of the spring 72. The first result is that the inlet valve closure member 50 engages with its valve seat, thus keeping the pressure at the outlet port 44 constant initially. As the pedal travel increases, the further movement causes the annular rib 66 of the enlarged head 64 of the rod to disengage from the valve seat formed by the undersurface of the head 54 of the inlet valve closure member 50. This allows air which is holding off the spring brakes to start to be exhausted, depending upon the position of the 3/2 valve 24, and hence application of the spring brakes begins. If the input force is held, the lower piston 68 rises under the influence of spring 72, and the annular rib 66 of the head 64 therefore engages its valve seat, closing the exhaust valve. Operation of the valve is otherwise very similar to the embodiment of Fig.3.

It is necessary in each embodiment to check, each time the vehicle power is turned on, that the solenoid operated 3/2 valve has been restored to the failed condition by the spring. This is achieved by maintaining the fault shut down relays in the de-energised condition in which the contacts remain open for a short period after the lamp supply is switched on. The valve mechanism should be in the failure position at this time and the valve switch should be closed. Thus, the driver should see and register a short illumination period on this warning lamp as a movement check at each power switch on, thereby confirming that the solenoid valve is free and responsive. On starting the vehicle, if the 3/2 valve fails to switch, as a result of seizure or failure of both power supplies or electronic control units, the fault may be confirmed by illumination of the lamp 36, which continues after the test period.

Although the operation has only been described with reference to the brakes on a single axle, if more than one axle were provided with brakes then these too could be controlled using the same back up valve, thus offering full performance back up braking on all wheels.

There is no conflict between the back up system described and the operation of the parking brake valve. In fact, in order for the vehicle to be driven away following a power failure, the parking brake valve must be moved into the off position, if it had been operated to brake the vehicle. This would be a deliberate act on the part of the driver, which would release the brakes yet allow him to continue to apply them via the foot pedal.

An alternative back-up system, which can use the same apparatus as for the above embodiments, uses

8

the same mechanism of applying the back-up braking, but recognises that this may generally be associated with the brakes on a particular axle (e.g. the rear axle when spring brakes are used) and that another axle (e.g. the front axle) will not be braked in a back-up actuation. The control system would provide for one half of the dual circuit foundation braking system to operate via the brakes of a first selected axle (e.g. the front axle) connected to an auxiliary battery and the other half of the dual circuit foundation braking system to include a control system powered from the main battery, and operating the brakes on another, second, axle (e.g. the rear axle) and on a trailer (if fitted).

Given this combination it is advantageous to arrange, by suitable adjustment of the spring 28, for the 3/2 solenoid valve 24 to be moved into its back-up mode whenever the controller or power supply of the second axle braking (e.g. the rear braking) should fail, or whenever the contact 32 is opened due to release of the appropriate shut down relay because of a system fault. Under this modification, there will be a back-up braking mode in which normal EPB braking will be applied to the brakes of the first axle (e.g. the front brakes) and a reduced level of back-up braking will be applied to the brakes of the second axle (e.g. the rear axle) and to the trailer (if fitted). The level of back-up braking will be dependent on the relationship between the electrical braking demand signal from the pedal and the air pressure (inverse or "upright", as the case may be) developed at that treadle position at valve 22, 22′.

Thus, in contrast to the earlier description, where the solenoid of the 3/2 valve switches only when power is lost from both electronic braking circuits, the alternative back-up system switches the valve 24 into its back-up position when power is lost from a single electronic braking circuit.

## Claims

1. A vehicle braking system comprising a transducer (F, R) connected to a vehicle brake pedal and producing electrical output signals in response to a braking demand, and an electronic control unit (14, 16) adapted to receive the electrical output signals and electronically control the braking pressure in one or more brakes of the vehicle, characterised by a first, brake pressure control valve (22) actuated by depression of the vehicle brake pedal in order to modulate a pressurised air supply fed to the valve to produce an output which varies with braking demand, a second, selector valve (24) disposed between the first valve and a vehicle brake (18, 20) to be controlled in a back-up mode, and means (30) for actuating the second valve in response to failure of the normal vehicle braking system to connect the output of the first valve (22) to the brake (18, 20) to be controlled in the back-up mode.

2. A system as claimed in claim 1, wherein the means (30) for actuating the second valve comprises a spring (28) which biases the second valve into a back-up position in which it connects the output of the first valve (22) to the brake (18, 20) to be controlled, and a solenoid actuator (30) adapted to be energised during operation of the normal braking system to displace the valve against the force of the spring into a normal position in which it isolates the output of the first valve from the brake to be controlled.

3. A system as claimed in claim 2, wherein the normal braking system has a plurality of electronic braking channels, and the solenoid actuator (30) is actuable by a plurality of coils each coil being actuated by a respective braking channel.

4. A system as claimed in claim 3, wherein each of the coils must be de-energised in order to permit the spring (28) to displace the second valve in order to connect the output of the first valve to the brake.

5. A system as claimed in claim 2, wherein the normal braking system has a plurality of electronic braking channels, and the solenoid actuator (30) is actuable by a single coil which is actuated by one of the braking channels.

6. A system as claimed in claim 5, wherein the said one braking channel is adapted to control the normal braking of the rear vehicle brakes.

7. A system as claimed in any of the preceding claims, wherein the first valve (22) is adapted to be connected to the spring chamber (18a, 20a) of a spring brake (18, 20).

8. A system as claimed in claim 7, wherein the first valve (22) is provided with a source of pressurised air.

9. A system as claimed in claim 8, wherein the second valve (24) alternatively connects the source of pressurised air directly to the spring chamber in its normal position and connects the source of pressurised air as modulated by the first valve (22) when in its back-up position.

10. A system as claimed in claim 8 or claim 9, wherein the source of pressurised air comprises the output from a vehicle parking brake selector valve (26).

11. A system as claimed in any of claims 1 to 10, further comprising a trailer braking control valve (T), a parking brake control valve (26) having a vehicle spring brake pressure port and a trailer braking control

EP 0 394 065 A2

valve pressure port, and a third valve (D) adapted to connect either the trailer braking control valve pressure port or the output of the second, selector valve to the trailer braking control valve (T).

12. A system as claimed in claim 11, wherein the third valve (D) is a three-port, two-position differential pressure valve, whose position is controlled by the pressures at the outlet ports of the parking brake control valve (26).

13. A system as claimed in claim 12, wherein the pressure at the vehicle spring braking port acts upon a larger pilot area in the third valve than does the pressure at the trailer braking control valve pressure port.

14. A system as claimed in any of claims 1 to 10, further comprising a trailer braking control valve (T), and a parking brake control valve (26) having a vehicle spring brake pressure port and a trailer braking control valve pressure port, the outlet of the second, selector valve (24) forming the input to the parking brake control valve (26).

15. A system as claimed in any of claims 11 to 14, wherein in a first, driving, position of the parking brake control valve (26) both ports are pressurised, in a second, secondary, position both ports are connected to atmosphere, and in a third, parking, position the vehicle spring braking port is connected to atmosphere and the trailer braking control valve port is pressurised.

16. A system as claimed in any of claims 1 to 4, wherein the first valve (22) is an upright valve.

17. A system as claimed in claim 16, wherein the second, selector valve is adapted to connect the first valve to a separate, back-up braking chamber of a brake in the back-up mode.

18. A system as claimed in claim 16, wherein the second, selector valve is adapted to connect the first valve to a normal braking chamber.

19. A system as claimed in claim 18, wherein the normal braking pressure and the output from the second, selector valve are connected to a double check valve which allows application of only one of the said pressures at any one time, and isolates the brake from the source of pressure which is not being applied.

20. A system as claimed in any of claims 16 to 19, wherein the first valve (22) is provided with a source of pressurised air.

21. A valve for a back-up braking system of a vehicle, comprising a pressure inlet port (42) and a pressure exhaust port (46) selectively connectible to a pressure outlet port (44) which, in use, is connected to the spring chamber of a spring brake, an inlet valve seat (56) disposed between the inlet port (42) and the outlet port (44), an inlet valve closure member (50) biased by a first spring (58) towards sealing engagement with the inlet valve seat (56) in which the inlet port (42) is isolated from the outlet port (44), an exhaust valve seat located on said inlet valve closure member, and an exhaust valve closure member (64) biased by a second spring (72) to engage the exhaust valve seat and to displace the inlet valve closure member (50) from the inlet valve seat (56) against the force of the first spring (58), the exhaust valve closure member being movable by displacement of a vehicle brake pedal against the biasing force of the second spring to allow engagement of the inlet valve closure member (50) with the inlet valve seat (56) to close the inlet valve and, upon subsequent displacement of the brake pedal, to disengage the exhaust valve closure member (64) from the exhaust valve seat to open the exhaust valve.

22. A valve as claimed in claim 21, wherein the inlet valve seat (56) is annular, the inlet valve closure member comprises a hollow piston (50) whose interior communicates with the pressure exhaust port (46) and one end of which is sealingly engageable with the inlet valve seat (56), and the exhaust valve seat is formed on the said end of the hollow piston (50), radially inwardly of the inlet valve seat.

23. A valve as claimed in claim 21 or claim 22, wherein the exhaust valve closure member (62) passes through the inlet valve closure member (50).

24. A valve as claimed in any of claims 21 to 23, further comprising an enlarged piston (68) connected to the exhaust valve closure member and slidably disposed in a bore located on the pressure outlet port side of the inlet valve seat (56), such that the pressure prevailing at the pressure outlet port acts upon one face of the piston (68).

25. A valve as claimed in claim 24, comprising a passage (82) connecting the pressure inlet port (42) with the opposite face of the piston (68).

26. A valve as claimed in any of claims 21 to 25, wherein the exhaust valve closure member is provided with an enlarged head (64) for engagement with the exhaust valve seat.

10

Fig. 1.

EP 0 394 065 A2

Fig. 2.

EP 0 394 065 A2

*Fig. 3.*

Fig. 4.

EP 0 394 065 A2

Fig. 5.

EP 0 394 065 A2

Fig. 6.

Fig. 7.

EP 0 394 065 A2

*Fig. 8.*

EP 0 394 065 A2

Fig. 9.

EP 0 394 065 A2

Fig. 10.

EP 0 394 065 A2

Fig. 11.

EP 0 394 065 A2

Fig. 12.